# EUROPÄISCHE PATENTSCHRIFT

(11) **EP 0 616 068 B1**
(45) Veröffentlichungstag und Bekanntmachung des Hinweises auf die Patenterteilung: **23.04.1997**
(21) Anmeldenummer: 94101502.6
(22) Anmeldetag: 02.02.1994
(51) Int. Cl.: D06F 39/00, D06F 39/08

(54) **Trommelwaschmaschine mit einer Programmablaufsteuereinrichtung**
Drum-washing machine with a programme progress control device
Machine à laver à tambour avec un dispositif de commande du déroulement du programme

(30) Priorität: 11.02.1993 DE 4304031
(43) Veröffentlichungstag der Anmeldung: 21.09.1994
(73) Patentinhaber: AEG Hausgeräte GmbH, 90429 Nürnberg (DE)
(72) Erfinder: Stamminger, Rainer, Dr. Dipl.-Phys., D-91207 Lauf (DE); Ott, Günter, Ing. (grad), D-90768 Fürth (DE); Henninger, Alfred, Dipl.-Ing., D-91438 Bad Windsheim (DE); Wipperfürth, Franz-Josef, Ing. (grad), D-90556 Cadolzburg (DE)

(56) Entgegenhaltungen:
- DE-A- 3 030 491
- DE-A- 4 122 307
- GB-A- 2 081 751

## Beschreibung

Die Erfindung betrifft eine Trommelwaschmaschine mit einer Programmablaufsteuerungseinrichtung nach dem Oberbegriff des Patentanspruchs.

Bei Trommel-Waschmaschinen wird der Frischwasserzulauf für die unterschiedlichen Wasserstände im Laugenbehälter über einen Wasserstandsregler (Druckwächter, Niveauschalter) gesteuert. Ein solcher Wasserstandsregler arbeitet in der Weise, daß bei Erreichen des gewünschten Wasserstandes (Sollniveau) über einen Schalter oder ein elektronisches Bauteil ein den Frischwasserzulauf beherrschendes Magnetventil geschlossen und damit der Wasserzulauf zum Laugenbehälter unterbrochen wird. Wird durch Aufsaugen des zugelaufenen Frischwassers ein bestimmter Wasserstand (Rückschaltniveau) im Laugenbehälter erreicht, so wird zum Nachtanken der Frischwasserzulauf durch Öffnen des Magnetventils wieder freigegeben. Durch diese Verfahrensweise wird dem Laugenbehälter am Ende der Wäschedurchfeuchtungsphase in der Regel aber mehr Frischwasser zugeführt als in der nachfolgenden Waschphase unbedingt erforderlich ist.

Aus der DE-A-41 22 307 ist eine Trommelwaschmaschine dieser Art bekannt, bei der zu Programmbeginn während der Wäschedurchfeuchtungsphase bei noch stillstehender Wäschetrommel nach Erreichen des Sollniveaus (Arbeitsniveau) die erste Wäschesaugzeit bis zum Absinken auf das Rückschaltniveau gemessen wird. Die Länge dieser Zeitspanne stellt das Maß für die Wäschesaugfähigkeit und somit für die Wäscheart dar. Danach wird bei bewegter Wäschetrommel die zweite Wäschesaugzeit zwischen Sollniveau und Erreichen des Rückschaltniveaus ermittelt und der zeitliche Unterschied zwischen der zweiten und der ersten Wäschesaugzeit bestimmt. Aus der Zeitdifferenz zwischen diesen beiden Wäschesaugzeiten wird die Wäschemenge ermittelt. Daraus erkennt die Steuereinrichtung der Waschmaschine selbsttätig, ob auf ein Arbeitsprogramm für kleine oder große Wäschemengen unter gleichzeitiger Mitberücksichtigung der Wäscheart umgeschaltet werden muß. Durch diese Maßnahmen wird das Waschprogramm automatisch optimal auf die jeweilige Wäschemenge angepaßt und es ergibt sich dadurch eine Wassereinsparung sowie Einsparung von Heizenergie bei der Laugenaufheizung.

Demgegenüber liegt der Erfindung die Aufgabe zugrunde, bei einer Waschmaschine der in Rede stehenden Art zu erreichen, daß der Waschvorgang mit einem gegenüber dem bisher üblichen Wasserstand im Laugenbehälter reduzierten Wasserstand durchgeführt werden kann.

Die Lösung dieser Aufgabe gemäß der Erfindung ist dem kennzeichnenden Teil des Patentanspruchs zu entnehmen.

Durch die Erfindung wird erreicht, daß der Waschvorgang mit reduzierter freier Flotte abläuft. Daraus ergibt sich der Vorteil einer weiteren Einsparung an Primärenergie.

Ein Ausführungsbeispiel der Erfindung wird anhand eines Arbeitsdiagramms einer Waschmaschine nachfolgend näher beschrieben.

Bei einer Waschmaschine der in Rede stehenden Art ist eine Wäschetrommel in bekannter Weise in einem Laugenbehälter drehbar gelagert. Als Wasserstandsregler ist ein üblicher Niveauschalter vorgesehen, der schaltungstechnisch mit einer zentralen Steuereinheit einer Programmablaufsteuereinrichtung verbunden ist. Der Zulauf voh Frischwasser erfolgt über eine Zuleitung, in der sich ein Magnetventil befindet. Dieses Magnetventil erhält seine Steuerbefehle von der Programmablaufsteuereinrichtung. Mit Starten des gewählten Waschprogramms fließt nun Frischwasser über das geöffnete Magnetventil in den Laugenbehälter. Dabei erfolgt während der Wäschedurchfeuchtungsphase im ersten Programmteil des Waschprogramms der Frischwasserzulauf in den Laugenbehälter niveaugesteuert, wie das Arbeitsdiagramm zeigt. In einer ersten Zulaufphase, in der die Wäsche noch völlig trocken ist, kann nun eine das Sollniveau (Schaltpunkt des Niveauschalters) mehr oder weniger überschreitende Überfüllung des Laugenbehälters vorgenommen werden. Der Vorgang des Überfüllens kann dabei zweckmäßig zeitlich gesteuert werden. Wie aus dem Arbeitsdiagramm weiterhin aus den Linien für große, mittlere und kleine Wäschefüllmengen zu entnehmen ist, ist die Sauggeschwindigkeit der Wäsche sehr stark abhängig von der jeweiligen Wäschetrommel-Beladungsmenge. Während der Wäschedurchfeuchtungsphase werden nun weiterhin erforderliche Frischwasser-Ergänzungen (nachtanken) bei Erreichen des Niveau-Rückschaltpunktes im Laugenbehälter durch den Niveauschalter gesteuert. Aus der Zeitdauer zwischen dem Sollniveau-Schaltpunkt und dem Niveau-Rückschaltpunkt können nun Schlüsse für die Sauggeschwindigkeit der Wäsche gezogen werden.

Hat sich nun ein bestimmter Wasserstand (freie Flotte) im Laugenbehälter eingestellt, d.h. die Wäschedurchfeuchtungsphase ist abgeschlossen, braucht nicht mehr nachgetankt zu werden. Der Waschvorgang wird dann in der üblichen Weise fortgesetzt. In Erkenntnis, daß der an der Wäschedurchfeuchtungsphase (Benetzungsvorgang) sich anschließende Waschvorgang auch mit einer reduzierten freien Flotte zufriedenstellend durchführbar ist, wird vorgeschlagen, in Abhängigkeit von der Wäschefüllmenge und/oder der Saugfähigkeit der Wäsche während der Durchfeuchtungsphase einen Zeitpunkt t ₑₓ festzulegen bzw. zu ermitteln, ab dem ein weiteres automatisches Nachtanken von Frischwasser bei Erreichen oder Unterschreiten des Niveaurückschaltpunktes ausgeschlossen ist. Vorteilhafter Weise wird der vorgenannte Zeitpunkt t ₑₓ vor dem letzten Frischwasser-Nachtankvorgang gelegt. Damit wird erreicht, daß dem Laugenbehälter während der auf dieser Weise auch zeitlich verkürzten Wäschedurchfeuchtungsphase etwa ein Liter weniger Frischwasser zugeführt wird. Um aber ein Trockengehen des Laugenbehälters zu vermeiden, ist sichergestellt, daß mit Erreichen des Trockengehniveaus der Frischwasserzulauf auf jeden Fall zum Nachfüllen des Laugenbehälters wieder freigegeben wird.

Die Realisierung der vorbeschriebenen Maßnahme zur Verkürzung der Wäschedurchfeuchtungsphase erfolgt z.B. mit Hilfe eines sogenannten Fuzzy-Prozessors mit Fuzzy-Schlußfolgerungseinrichtung (sogenannte Fuzzy-Control), durch die die Abhängigkeit des Zeitpunktes t ₑₓ von der Wäschefüllmenge, der Waschprogrammwahl sowie der Sauggeschwindigkeit des jeweiligen Waschgutes einfach umzusetzen ist.

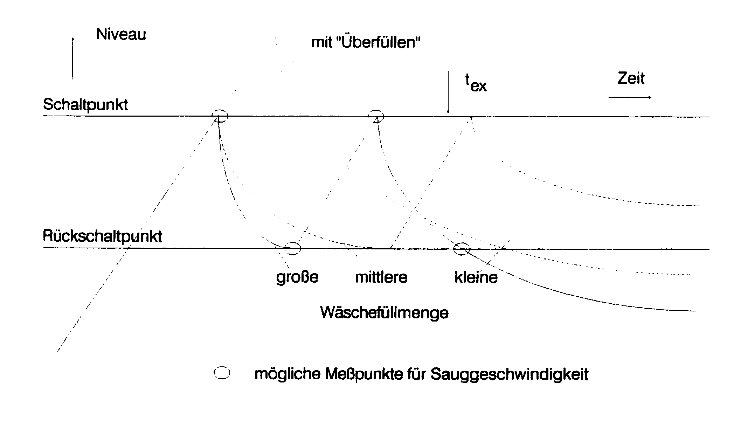

## Patentansprüche

1. Trommelwaschmaschine mit einer Programmablaufssteuereinrichtung und mit wasserstandsgeregeltem Frischwasserzulauf, bei der während der Wäschedurchfeuchtungsphase im ersten Programmteil des Waschprogramms mit Erreichen des Sollniveaus über einen Niveauschalter der Frischwasserzulauf zum Laugenbehälter abgestellt und mit Erreichen des Rückschaltniveaus zum Nachtanken wieder freigegeben wird, wobei die Länge der Zeitspanne zwischen dem Sollniveau und Erreichen des Rückschaltniveaus im Laugenbehälter das Maß für die Saugfähigkeit der Wäsche darstellt, gekennzeichnet durch die Verwendung eines Fuzzy-Prozessors mit Fuzzy-Schlußfolgerungseinrichtung, dem während der Wäschedurchfeuchtungsphase Meßwerte über die Sauggeschwindigkeit der Wäsche zugeführt und mit Hilfe dieser Einrichtung aus diesen Meßwerten ein das weitere Nachtanken von Frischwasser bei Erreichen bzw. Unterschreiten des Rückschaltniveaus ausschließender Zeitpunkt tₑₓ während der Wäschedurchfeuchtungsphase festgelegt bzw. ermittelt und dieser Zeitpunkt tₑₓ vor dem letzten Frischwasser-Nachtankvorgang gelegt wird.

## Claims

1. Drum washing machine with a programme cycle control device and water-level controlled fresh water supply, in which during the laundry dampening phase in the first part of the washing programme, when the reference level is reached, the fresh water supply to the lye container is switched off via a level switch, and when the switching-back level is reached, the switch is switched on again for refilling, wherein the length of the period between the reference level and reaching of the switching-back level in the lye container represents the measure of the absorbency of the laundry. characterised by the use of a fuzzy processor with fuzzy deduction device, to which during the laundry dampening phase measurements of the absorption speed of the laundry are fed and by means of this device. from these measurements. a point in time tₑₓ is fixed or determined during the laundry dampening phase and this point in time tₑₓ is set before the last fresh water refilling operation.

## Revendications

1. Machine à laver à tambour avec un dispositif de commande du déroulement du programme et une arrivée d'eau fraîche à régulation de niveau d'eau, dans laquelle, pendant la phase d'humidification du linge, dans la première partie de programme du programme de lavage quand le niveau de consigne est atteint, l'arrivée d'eau fraîche dans une cuve à lessive est fermée par un interrupteur de niveau et est à nouveau libérée pour le remplissage ultérieur quand le niveau d'inversion est atteint, la longueur de l'intervalle temps entre le niveau de consigne et l'obtention du niveau d'inversion dans la cuve à lessive, représente la référence pour la capacité d'absorption du linge, caractérisée par l'utilisation d'un processeur Fuzzy avec un dispositif de conclusion Fuzzy qui reçoit, pendant la phase d'humidification du linge, des valeurs de mesure sur la vitesse d'absorption du linge, dispositif à l'aide duquel un moment t ₑₓ, qui exclut le remplissage ultérieur supplémentaire d'eau fraîche, quand le niveau d'inversion est atteint respectivement non dépassé, est fixé respectivement déterminé à partir de ces valeurs de mesure pendant la phase d'humidification du linge et ce moment t ₑₓ est placé avant la dernière opération de remplissage ultérieur d'eau fraîche.
